# EUROPÄISCHE PATENTSCHRIFT

(11) **EP 0 714 334 B1**
(45) Veröffentlichungstag und Bekanntmachung des Hinweises auf die Patenterteilung: **10.12.1997**
(21) Anmeldenummer: 94922845.6
(22) Anmeldetag: 06.08.1994
(51) Int. Cl.: B23B 31/00, B23B 31/02

(54) **SPANNFUTTER UND ZUGEHÖRIGES WERKZEUG**
CHUCK AND ASSOCIATED TOOL
MANDRIN DE SERRAGE ET OUTIL Y AFFERENT

(30) Priorität: 18.08.1993 DE 4327698
(43) Veröffentlichungstag der Anmeldung: 05.06.1996
(73) Patentinhaber: Widia GmbH, 45145 Essen (DE)
(72) Erfinder: KÄSMEIER, Georg, D-84186 Gundihausen (DE); MINTERT, Klaus, D-90556 Seukendorf (DE)
(74) Vertreter: Schieferdecker, Lutz, Dipl.-Ing.
(86) Internationale Anmeldenummer: DE9400911
(87) Internationale Veröffentlichungsnummer: WO9505257

(56) Entgegenhaltungen:
- WO-A-93/08946
- FR-A- 2 134 202

## Beschreibung

Die Erfindung betrifft ein Spannfutter und ein zugehöriges Werkzeug jeweils mit den Merkmalen des Oberbegriffes des Patentanspruches 1 (siehe FR-A-2 134 202).

Aus der FR-A-2 134 202 sind bereits ein Spannfutter und ein zugehöriges Werkzeug mit einem Schaft bekannt, der in einer Aufnahmebohrung eines Grundkörpers des Spannfutters in verschiedenen Positionen befestigbar ist, wozu ein quer zur Längsrichtung des Spannfutters bewegbares, in seinem Grundkörper angeordnetes Befestigungselement vorgesehen ist. Zur Erzielung unterschiedlicher Einstellpositionen weist der Schaft in axialen Abständen voneinander befindliche, segmentförmige Ausnehmungen auf, in denen das im Grundkörper angeordnete Befestigungselement jeweils liegt. Dieses Befestigungselement ist konkret bei dem aus der FR-A-2 134 202 bekannten Spannfutter ein stabförmiges Teil, das von einem zusätzlich vorgesehenen Sicherungsring außen am Spannfutter durch einen Schlitz in dessen Grundkörper greift und schließlich in der segmentförmigen Ausnehmung des Schaftes liegt oder bei Verdrehung des Schaftes aus diesem heraus bis auf seinen kreisförmigen Restumfang gleiten kann, so daß sich das zugehörige Werkzeug bei Erreichen dieser Position entnehmen oder einsetzen läßt.

Der mit diesem bekannten Spannfutter und zugehörigen Werkzeug herstellungstechnisch und auch im praktischen Gebrauch verbundene Aufwand ist außerordentlich groß.

Um eine einwandfreie Funktion des aus der FR-A-2 134 202 bekannten Spannfutters und zugehörigen Werkzeuges sicherzustellen, ist ferner noch eine Halteschraube vorgesehen, die mit ihrem freien Ende das stabförmige Teil in der Halteposition übergreifen muß, damit sich das Werkzeug aufgrund von angreifenden Kräften nicht drehen kann. Im Ergebnis ist die bekannte Konstruktion weder für einen schnellen Werkzeugwechsel noch überhaupt für eine zügige Veränderung der Lage des Werkzeuges relativ zu seinem Spannfutter geeignet.

Gegenüber diesem Stand der Technik liegt der Erfindung die Aufgabe zugrunde, Maßnahmen derart vorzusehen, daß das Spannfutter und sein zugehöriges Werkzeug auf möglichst einfache und unkomplizierte Weise einstellbar sind und daß zugleich auch der konstruktive Aufwand nur gering ist, damit das Spannfutter und das Werkzeug kostengünstig herstellbar sind.

Zur Lösung dieser Aufgabe sieht die Erfindung mit den Merkmalen des Patentanspruches 1 vor, daß ausgehend von einem Werkzeug mit den Merkmalen des Oberbegriffs des Anspruchs 1 der Schaft an seinem Umfang eine sich in axialer Richtung erstreckende, langgestreckte sowie ebene Fläche aufweist und daß die Wirk- und Halteflächen für das Befestigungselement in Gestalt von Vertiefungen in dieser ebenen Fläche vorgesehen sind, daß ferner zwei am Schaft angreifende Befestigungselemente vorgesehen sind und daß die beiden Befestigungselemente im Grundkörper des Spannfutters derart angeordnet sind, daß jeweils ein Befestigungselement in eine Vertiefung greift, während dem freien Ende des anderen Befestigungselementes eine Angriffsfläche zwischen zwei benachbarten Wirk- und Halteflächen bzw. zwischen zwei für das erste Befestigungselement bestimmten Vertiefungen zugeordnet ist.

Die Verwendung einer langgestreckten sowie ebenen Fläche am Umfang des Schaftes und die Anordnung von für Haltezwecke dienenden Vertiefungen in dieser Fläche vereinfacht die Herstellung des Schaftes für das Werkzeug entscheidend. Grundsätzlich Gleiches gilt auch für die Anordnung von zwei gleichwertigen, am Schaft angreifenden Befestigungselementen im Gegenssatz zu dem aus der FR-A-2 134 202 bekannten stabförmigen Halteteil und der zu diesem gehörenden, das Halteteil formschlüssig hintergreifenden Sicherungsschraube. Sowohl die Herstellung als auch die Handhabung des Spannfutters und seines zugehörigen Werkzeuges sind daher außerordentlich einfach und unkompliziert.

Gemäß einem bevorzugten Ausführungsbeispiel sind zwei Befestigungselemente in Gestalt von Schrauben vorgesehen, wobei das eine Befestigungselement primär die Funktion einer Zentrier- und Spannschraube besitzt und das andere, eine ebene Fläche aufweisende Befestigungselement in erster Linie als Spann- und Konterschraube wirkt.

Weitere Merkmale der Erfindung gehen aus Unteransprüchen im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1:: eine zum Teil geschnittene Seitenansicht eines Spannfutters mit einem eingesetzten Werkzeug und
- Fig. 2:: einen Schnitt durch das Werkzeug in der Ebene II.

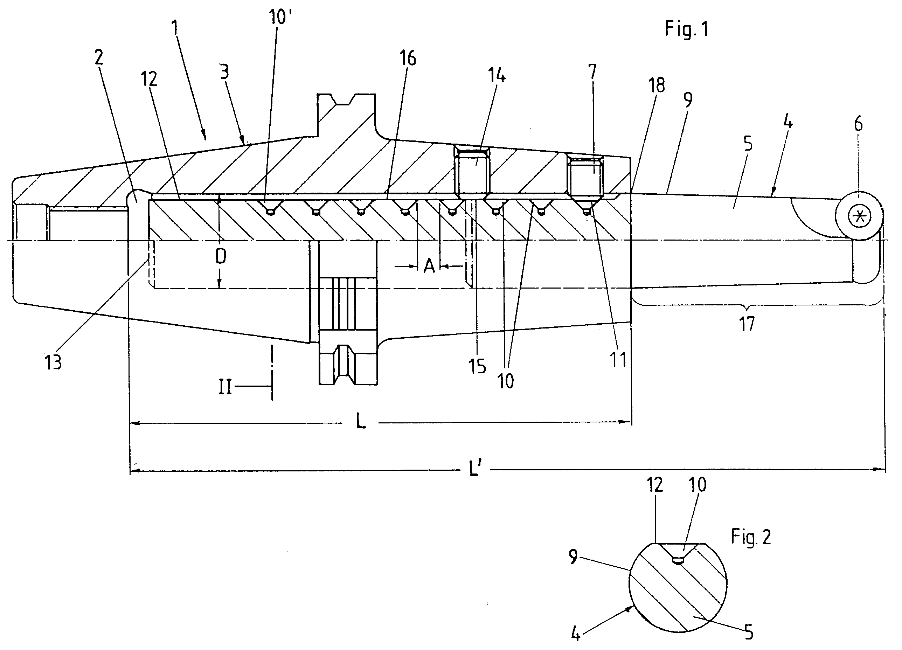

Ein Spannfutter 1 besteht gemäß dem in Fig. 1 dargestellten Ausführungsbeispiel aus einem eine Aufnahmebohrung 2 aufweisenden Grundkörper 3 und dient zur Aufnahme eines zugehörigen Werkzeuges 4 wie z.B. eines Schaftfräsers, der aus einem Schaft 5 und aus z.B. einer oder mehreren Schneidplatten 6 besteht. In dem Grundkörper 3 des Spannfutters 1 ist ferner mindestens ein quer bewegliches Befestigungselement 7 angeordnet und greift zur Befestigung des Werkzeuges 4 am Umfang 9 von dessen Schaft 5 an.

Gemäß Ausführungsbeispiel sind ferner mehrere Wirk- und Halteflächen 10 am Schaft 5 des Werkzeuges 4 in axialem Abstand voneinander in einer Ebene angeordnet und wirken unabhängig voneinander mit dem Befestigungselement 7 zusammen.

Die dem Befestigungselement 7 zugeordneten Wirk- und Halteflächen 10 sind gemäß Ausführungsbeispiel sich verjüngende Vertiefungen, wie aus den Figuren 1 und 2 hervorgeht. Diese Wirk- und Halteflächen 10 können konisch, kegelstumpfförmig bzw. auch ballig sein oder die Form und Gestalt einer sich in Umfangsrichtung erstreckenden Rille haben.

Entsprechend der Form und Gestalt der Wirk- und Halteflächen 10 weist das Befestigungselement 7 gemäß Ausführungsbeispiel ein freies, sich verjüngendes bzw. kegelstumpfförmiges Ende 11 auf. Das zum Zentrieren und zum Befestigen dienende Befestigungselement 7 wirkt formschlüssig mit den sich verjüngenden Vertiefungen bzw. Wirk- und Halteflächen 10 zusammen.

Die Wirk- und Halteflächen 10 sind fluchtend in einer Linie angeordnet und befinden sich in einer sich am Umfang 9 des Schaftes 5 in axialer Richtung erstreckenden sowie vorzugsweise ebenen Fläche 12. Diese Fläche 12 erstreckt sich vom spannfutterseitigen Ende 13 des Schaftes 5 über den größten Teil seiner Länge. Wie aus Fig. 1 hervorgeht, sind acht Wirk- und Halteflächen 10 in Form von sich verjüngenden Vertiefungen in der ebenen Fläche 12 am Umfang 9 des Schaftes 5 vorgesehen.

Grundsätzlich genügt ein Befestigungselement 7 für viele Anwendungsfälle. Gemäß Ausführungsbeispiel befindet sich jedoch im Grundkörper 3 des Spannfutters 1 noch ein weiteres Befestigungselement 14 für das Werkzeug 4. Dieses Befestigungselement 14 weist ein flaches bzw. ebenes, an der ebenen Fläche 12 des Werkzeuges 4 angreifendes Ende 15 auf.

Mindestens eines, vorzugsweise jedoch beide Befestigungselemente 7 und 14 sind Schrauben, wobei das erste schraubenförmige Befestigungselement 7 in erster Linie zum Einstellen der Lage des Werkzeuges und auch zum Befestigen und das andere, schraubenförmige Befestigungselement 14 in erster Linie zum Befestigen des Werkzeuges 4 sowie zum Kontern vorgesehen ist.

Die Wirk- und Halteflächen 10 bzw. die konischen Vertiefungen sind in einem axialen Abstand A voneinander angeordnet, der gleich der wirksamen Breite der ebenen Fläche am freien Ende 15 des zweiten, schraubenförmigen Befestigungselementes 14 ist. Darüber hinaus sind die beiden schraubenförmigen Befestigungselemente 7, 14 im Grundkörper 3 derart angeordnet, daß jeweils das eine Befestigungselement 7 formschlüssig an der Wirk- und Haltefläche 10 angreift bzw. in die konische Vertiefung greift, während dem freien Ende 15 des anderen, schraubenförmigen Befestigungselementes 14 jeweils eine Angriffsfläche (16) in Form einer ebenen Zwischenfläche oder Mitnahmefläche zugeordnet ist, die sich zwischen zwei benachbarten, kegelstumpfförmigen Wirk- und Halteflächen 10 bzw. Ansenkungen befindet.

Schließlich zeigt Fig. 1, daß die Aufnahmebohrung 2 im Grundkörper 3 und daß der Schaft 5 des Werkzeuges 4 eine große Länge L bzw. L' im Vergleich zum Durchmesser D aufweisen. Dabei ist es zweckmäßig, wenn z.B. die Länge L der Aufnahmebohrung 2 das Fünf- bis Sechsfache des Durchmessers D beträgt.

Die Länge des kürzestmöglichen, aus dem Spannfutter 1 bzw. Kupplungselement frei auskragenden Endstückes 17 des Werkzeuges 4 beträgt etwa ein Drittel der gesamten Länge L' des Schaftes 5. Die Länge des größtmöglichen, frei auskragenden Endstückes ist etwa doppelt bis 2,5mal so lang wie die Länge des kürzestmöglichen Endstückes 17.

Die letzte, in der Aufnahmebohrung 2 befindliche Wirk- und Haltefläche 10' ist im Abstand von dem freien Ende 13 des Schaftes 5 angeordnet. Dieser Abstand entspricht ferner dem Abstand der beiden schraubenförmigen Befestigungselemente 7 und 14, die wiederum nahe bei der Öffnung 18 der Aufnahmebohrung 2 angeordnet sind. Der Abstand des schraubenförmigen Befestigungselementes 14 von dem schraubenförmigen Befestigungselement 7 ist schließlich derart gewählt, daß sich jeweils zwei freie Wirk- und Halteflächen 10 und zusätzlich zwei Mitnahmeflächen 16 zwischen ihnen befinden.

## Patentansprüche

1. Spannfutter und zugehöriges Werkzeug, wobei das Spannfutter (1) einen Grundkörper (3) mit einer Aufnahmebohrung (2) und das Werkzeug (4) einen Schaft (5) aufweisen und wobei ferner mindestens ein quer bewegliches, zur Befestigung des Werkzeuges (4) am Umfang (9) von dessen Schaft (5) angreifendes Befestigungselement (7) im Grundkörper (3) angeordnet ist und der Schaft (5) des Werkzeuges (4) in axialem Abstand voneinander mehrere und dem Befestigungselement (7) unabhängig voneinander zugeordnete Wirk- und Halteflächen (10) aufweist,
dadurch gekennzeichnet,
a) daß der Schaft (5) an seinem Umfang (9) eine sich in axialer Richtung erstreckende, langgestreckte sowie ebene Fläche (12) aufweist und daß die Wirk- und Halteflächen (10, 10') in Gestalt von Vertiefungen in dieser ebenen Fläche (12) angeordnet sind,
b) daß zwei am Schaft (5) angreifende Befestigungselemente (7, 14) vorgesehen sind und
c) daß die beiden Befestigungselemente (7, 14) im Grundkörper (3) derart angeordnet sind, daß jeweils ein Befestigungselement (7) in eine Vertiefung greift, während dem freien Ende (15) des anderen Befestigungselementes (14) eine Angriffsfläche (16) zwischen zwei benachbarten Wirk- und Halteflächen (10) bzw. zwischen jeweils zwei für das erste Befestigungselement (7) bestimmten Vertiefungen zugeordnet ist.

2. Spannfutter nach Anspruch 1, dadurch gekennzeichnet, daß die beiden Befestigungselemente (7, 14) nahe bei der Öffnung (18) der Aufnahmebohrung (2) angeordnet sind.

3. Spannfutter nach einem der vorhergehenden Ansprüche, dadurch gekennzeichnet, daß beide Befestigungselemente (7, 14) jeweils Befestigungsschrauben sind, wobei die eine Befestigungsschraube (7) ein sich verjüngendes, insbesondere kegelstumpfförmiges Ende (11) und die andere Befestigungsschraube (14) ein flaches Ende (15) aufweist.

4. Spannfutter nach einem der vorhergehenden Ansprüche, dadurch gekennzeichnet, daß die Vertiefungen bzw. Wirk- und Halteflächen (10) in einem axialen Abstand (A) voneinander angeordnet sind, der gleich der wirksamen Breite der ebenen Fläche am freien Ende (15) des Befestigungselementes (14) ist.

5. Spannfutter nach einem der Ansprüche 3 oder 4, dadurch gekennzeichnet, daß der Abstand des Befestigungselementes (14) mit dem sich verjüngenden freien Ende (11) von dem Befestigungselement (7) mit dem flachen Ende (15) derart ist, daß sich jeweils zwei freie Wirk- und Halteflächen (10) und zwei Angriffsflächen (16) in Form von ebenen Zwischenflächen bzw. Mitnahmeflächen zwischen ihnen befinden.

6. Spannfutter nach einem der vorhergehenden Ansprüche, dadurch gekennzeichnet, daß die letzte, eine Vertiefung aufweisende Wirk- und Haltefläche (10') in einem Abstand von dem freien Ende (13) des Schaftes (5) derart angeordnet ist, daß ihr Abstand gleich dem Abstand der beiden Befestigungselemente (7 und 14) voneinander ist.

## Claims

1. A chuck and associated tool, wherein the chuck (1) has a main body (3) with a receiving bore (2) and the tool (4) has a shank (5), wherein moreover at least one transversely movable fixing element (7) which engages the periphery (7) of the shank (5) of the tool (4) for fixing the tool (4) is arranged in the main body (3) and the shank (5) of the tool (4) has at axial spacings from each other a plurality of operative and holding surfaces (10) which are associated with the fixing element (7) independently of each other,
characterised in that
a) the shank (5) has at its periphery (9) an elongated and flat surface (12) extending in the axial direction and that the operative and holding surfaces (10, 10') are arranged in the form of recesses in said flat surface (12),
b) there are provided two fixing elements (7, 14) which engage the shank (5), and
c) the two fixing elements (7, 14) are arranged in the main body (3) in such a way that a respective fixing element (7) engages into a recess while associated with the free end (15) of the other fixing element (14) is an engagement surface (16) between two adjacent operative and holding surfaces (10) or between each two recesses intended for the first fixing element (7).

2. A chuck according to claim 1 characterised in that the two fixing elements (7, 14) are arranged near the opening (18) of the receiving bore (2).

3. A chuck according to one of the preceding claims characterised in that both fixing elements (7, 14) are each fixing screws, wherein the one fixing screw (7) has a tapering, in particular frustoconical end (11) and the other fixing screw (14) has a flat end (15).

4. A chuck according to one of the preceding claims characterised in that the recesses or operative and holding surfaces (10) are arranged at an axial spacing (A) from each other which is equal to the operative width of the flat surface at the free end (15) of the fixing element (14).

5. A chuck according to one of claims 3 and 4 characterised in that the spacing of the fixing element (14) with the tapering free end (11) from the fixing element (7) with the flat end (15) is such that two respective free operative and holding surfaces (10) and two engagement surfaces (16) in the form of flat land surfaces or entrainment surfaces are disposed between them.

6. A chuck according to one of the preceding claims characterised in that the last operative and holding surface (10') having a recess is arranged at a spacing from the free end (13) of the shank (5) in such a way that its spacing is equal to the spacing of the two fixing elements (7 and 14) from each other.

## Revendications

1. Mandrin de serrage et outil afférent, le mandrin de serrage (1) présentant un corps de base (3) avec un perçage de logement (2) et l'outil (4) présentant un fût (5) et où, en outre, au moins un élément de fixation (7) déplaçable transversalement, agissant pour assurer la fixation de l'outil (4) sur la périphérie (9) de son fût (5), est disposé dans le corps de base (3) et le fût (5) de l'outil (4) présentant plusieurs surfaces actives et de maintien (10), placées à distance axiale les unes des autres et associées, indépendamment les unes des autres, à l'élément de fixation (7),
caractérisé
a) en ce que le fût (5) présente, sur sa périphérie (9), une surface (12) s'étendant en direction axiale, allongée ainsi que plane, et en ce que les surfaces actives et de maintien (10, 10') sont disposées sous la forme de creusements ménagés dans cette surface (12) plane,
b) en ce que deux éléments de fixation (7, 14) agissant sur le fût (5) sont prévus, et
c) en ce que les deux éléments de fixation (7, 14) sont disposés dans le corps de base (3), de manière que, chaque fois, un élément de fixation (7) s'engage dans un creusement, tandis que, à l'extrémité libre (15) de l'autre élément de fixation (14), est associée une surface active (16) placée entre deux surfaces active et de maintien (10), respectivement entre deux creusements, chacun déterminé pour le premier élément de fixation (7).

2. Mandrin de serrage selon la revendication 1, caractérisé en ce que les deux éléments de fixation (7, 14) sont disposés près de l'ouverture (18) du perçage de logement (2).

3. Mandrin de serrage selon l'une des revendications précédentes, caractérisé en ce que les deux éléments de fixation (7, 14) sont chacun des vis de fixation, une vis de fixation (7) présentant une extrémité (11) allant en s'effilant, en particulier à forme tronconique, et l'autre élément de fixation (14) présentant une extrémité (15) plate.

4. Mandrin de serrage selon l'une des revendications précédentes, caractérisé en ce que les creusements, respectivement les surfaces active et de maintien (10), sont disposées à une distance axiale (A) les unes des autres qui est égale à la largeur active de la surface plane réalisée à l'extrémité libre (15) de l'élément de fixation (14).

5. Mandrin de serrage selon l'une des revendications 3 ou 4, caractérisé en ce que la distance entre l'élément de fixation (14), ayant l'extrémité (11) libre allant en s'effilant, et l'élément de fixation (7), ayant l'extrémité (15) plate, est telle que, chaque fois, deux surfaces actives et de maintien (10) libres et deux surfaces actives (16), se présentant sous la forme de surfaces intermédiaires planes, respectivement de surfaces d'entraînement, se trouvent entre elles.

6. Mandrin de serrage selon l'une des revendications précédentes, caractérisé en ce que la dernière surface active et de maintien (10') présentant un creusement est disposée, vis-à-vis de l'extrémité libre (13) du fût (5), à une distance identique à la distance existant entre les deux éléments de fixation (7 et 14).
